# EUROPEAN PATENT SPECIFICATION

(11) **EP 3 730 311 B1**
(45) Date of publication and mention of the grant of the patent: **27.09.2023**
(21) Application number: 18892538.2
(22) Date of filing: 10.12.2018
(51) Int. Cl.: B60C 5/00, B29D 30/06, B60C 5/14, B60C 19/00, B60C 1/00, B29C 65/08, B29C 65/00

(54) **TIRE AND METHOD FOR FIXING POROUS BODY**
REIFEN UND VERFAHREN ZUR BEFESTIGUNG EINES PORÖSEN KÖRPERS
PNEU ET PROCÉDÉ DE FIXATION D'UN CORPS POREUX

(30) Priority: 18.12.2017 JP 2017242064
(43) Date of publication of application: 28.10.2020
(73) Proprietor: Bridgestone Corporation, Chuo-Ku Tokyo 104-8340 (JP)
(72) Inventor: KENJOH, Michio, Tokyo 104-8340 (JP)
(74) Representative: Marks & Clerk LLP
(86) International application number: PCT/JP2018/045360
(87) International publication number: WO 2019/124148

(56) References cited:
- EP-A1- 3 192 670
- WO-A1-2017/154684
- JP-A- 2008 111 045
- JP-A- 2011 148 437
- JP-A- 2011 240 626
- JP-A- 2011 240 626
- JP-A- 2015 107 690
- JP-A- 2016 055 439
- JP-A- 2016 060 257
- JP-A- 2017 531 586
- US-A1- 2009 199 942

## Description

### TECHNICAL FIELD

This invention relates to a tire and a method of fixing a porous body.

### BACKGROUND

Conventionally, there is known a tire that reduces road noise by adhering a porous body such as sound absorbing sponge to a tire inner surface to absorb cavity resonance energy. JP 4318639 B (PTL 1) describes a tire of this type.

### CITATION LIST

### Patent Literature

PTL 1: JP 4318639 B. Attention is also drawn to the disclosures of EP 3 192 670 A and US 2009/0199942 A.

### SUMMARY

### (Technical Problem)

It has been known that, in order to improve the release properties from a bladder that is in close contact during the vulcanizing and molding of a tire, a release agent such as silicone or mica is previously applied to a tire inner surface of a raw tire or an outer surface of the bladder before the vulcanization and molding. The release agent remains on the tire inner surface after the vulcanization and molding. Therefore, when a porous body is adhered to the tire inner surface, for example, the release agent on the tire inner surface inhibits the bonding of the porous body and the tire inner surface.

The release agent can be removed from the tire inner surface by, for example, baking with laser irradiation or washing with a detergent before adhering the porous body. However, there is a demand for a structure in which a porous body can be adhered without removing the release agent.

It could thus be helpful to provide a tire having an adhesion structure in which a porous body can be fixed to a tire inner surface without removing a release agent from the tire inner surface, and a method of fixing a porous body.

### (Solution to Problem)

The tire of a first aspect of the present invention is as claimed in claim 1.

The method of fixing a porous body of a second aspect of the present invention is as claimed in claim 8.

### (Advantageous Effect)

According to embodiments of the present invention, it is possible to provide a tire having an adhesion structure in which a porous body can be fixed to a tire inner surface without removing a release agent from the tire inner surface, and a method of fixing a porous body.

### BRIEF DESCRIPTION OF THE DRAWINGS

In the accompanying drawings:
FIG. 1 is a cross-sectional view illustrating a cross section of a tire of an embodiment of the present invention along a tire width direction;
FIG. 2 is an enlarged cross-sectional view illustrating the vicinity of the porous body of FIG. 1 in an enlarged manner;
FIG. 3 is an enlarged cross-sectional view in which a part of FIG. 2 is further enlarged;
FIG. 4 schematically illustrates an outline of a method of fixing a porous body of an embodiment of the present invention; and
FIG. 5 illustrates a porous body different from the porous body illustrated in FIG. 1.

### DETAILED DESCRIPTION

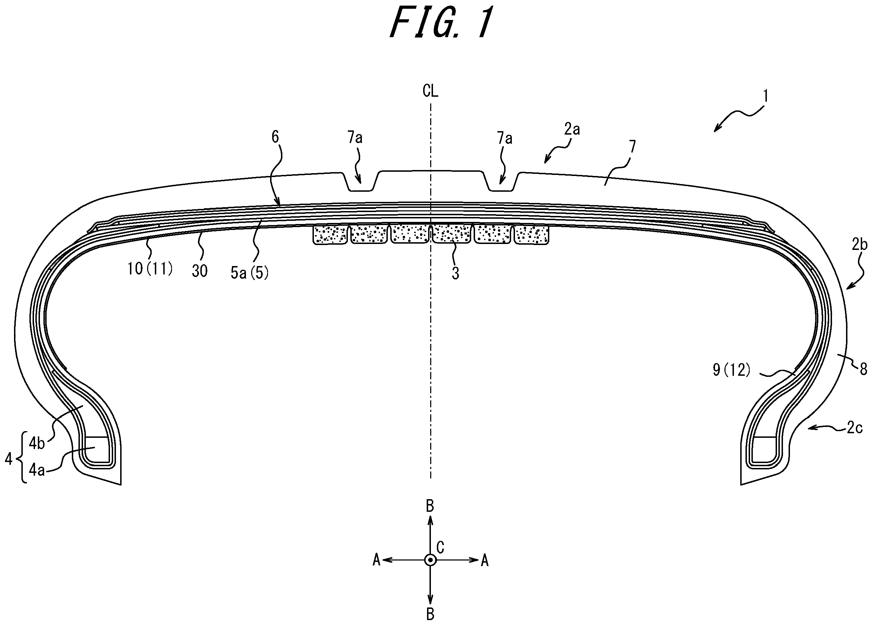

The following describes the tire and the method of fixing a porous body of an embodiment of the present invention with reference to FIGS. 1 to 5. In the drawings, common members and parts are designated by same reference signs.

FIG. 1 is a cross-sectional view of a cross section of a tire 1, which is an embodiment of the tire of the present invention, along a tire width direction A including a tire central axis of the tire 1.

As illustrated in FIG. 1, the tire 1 includes a tire body 2 and a porous body 3 adhered to an inner surface 30 of the tire body 2 (hereinafter referred to as "tire inner surface 30").

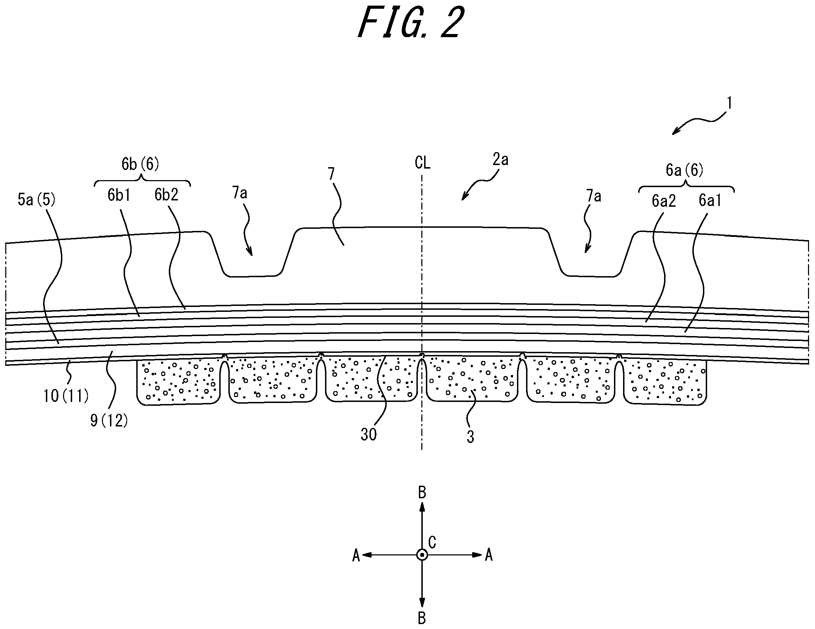

FIG. 2 is an enlarged cross-sectional view illustrating the vicinity of the porous body 3 of FIG. 1 in an enlarged manner. As illustrated in FIGS. 1 and 2, the tire body 2 includes an inner surface layer 11 that is formed of a thermoplastic resin or contains a thermoplastic resin, where the inner surface layer 11 forms the tire inner surface 30. As illustrated in FIG. 2, a part of the porous body 3 is embedded in the inner surface layer 11. Note that the words "a part of the porous body is embedded in the inner surface layer" mean that a part of the porous body is in contact with the inner surface layer around the extending direction of the inner surface layer.

As will be described later, although the tire 1 of the present embodiment is a tubeless type radial tire for passenger vehicles, it is not limited to this structure. For example, it may be a tire including a tire frame made of resin containing at least 50 mass% or more, preferably 90 mass% or more of a resin material such as a thermoplastic resin, a thermoplastic elastomer, or a thermosetting resin. In the case of such a tire including a tire frame made of resin, the above-described inner surface layer 11 may be formed by the tire frame itself. However, it is not limited to this structure, and the inner surface layer 11 may be formed by laminating another layer on the tire frame.

The inner surface layer 11 is not limited to the case of being formed of a thermoplastic resin. For example, it may have a composition in which a thermoplastic resin is partly contained, such as a composition in which a thermoplastic resin is mixed with rubber. In the case where the inner surface layer 11 has a composition in which a thermoplastic resin is partly contained, it preferably contains at least 50 mass% or more of a thermoplastic resin.

The material of the resin of which the inner surface layer 11 is formed or the resin contained in the inner surface layer 11 may contain polypropylene, polyethylene, polystyrene, AS resin, ABS resin, vinyl chloride resin, PA (6, 6-6, 6-10, 6-12, 12), or polyester.

The porous body 3 may be formed of, for example, a sponge material having open cells or closed cells obtained by foaming rubber or a synthetic resin. The porous body 3 of the present embodiment is formed of a sponge material. The material of the sponge material is preferably synthetic resin sponge such as ether-based polyurethane sponge, ester-based polyurethane sponge, and polyethylene sponge; or rubber sponge such as chloroprene rubber sponge (CR sponge), ethylene propylene rubber sponge (EDPM sponge), and nitrile rubber sponge (NBR sponge). In particular, it is preferably, for example, polyurethane-based or polyethylene-based ones including ether-based polyurethane sponge from the viewpoints of sound controlling, lightness, controllability of foaming, durability, and the like.

In addition, the porous body 3 may be formed of nonwoven fabrics. In the case where the porous body 3 is formed of nonwoven fabrics, it may be, for example, formed by intertwining animal fibers, plant fibers, mineral fibers, synthetic fibers, metal fibers, glass fibers, or the like. Examples of the material of the synthetic fibers include, for example, aromatic polyamide, polyamide, polyester, polyolefin, modacryl, and combinations thereof.

The porous body 3 may be formed by weaving animal fibers, plant fibers, mineral fibers, synthetic fibers, metal fibers, glass fibers, or the like.

The density of the porous body 3 may be set in the range of 16 kg/m³ to 100 kg/m³, for example. The hardness of the porous body 3 may be set in the range of 20 N to 300 N, for example. Note that the hardness means hardness measured based on the "Method D" specified in "Type of Test" of JIS K6400-2 cited in JIS K6401 (the 2011 edition). Further, the tensile strength of the porous body 3 may be set in the range of 50 kPa to 300 kPa, for example.

The porous body 3 can absorb sound by converting the vibration energy of vibrating air into heat energy through the voids formed on the surface or the inside of the porous body 3. As a result, it is possible to reduce cavity resonance noise generated in the tire 1 assembled with a rim.

As described above, the tire 1 includes an inner surface layer 11 that is formed of a thermoplastic resin or contains a thermoplastic resin, where the inner surface layer 11 forms the tire inner surface 30. Further, in the tire 1, a part of the porous body 3 is embedded in the inner surface layer 11, and the porous body 3 is fixed to the inner surface layer 11 in this way. With such an adhesion structure, it is possible to fix the porous body 3 to the tire inner surface 30 regardless of whether or not a release agent is removed from the tire inner surface 30, that is, it is possible to fix the porous body 3 to the tire inner surface 30 even without removing a release agent from the tire inner surface 30.

The following describes the tire 1 of the present embodiment in detail.

### <Tire body 2>

First, the tire body 2 of the tire 1 of the present embodiment will be described. As illustrated in FIG. 1, the tire body 2 of the present embodiment includes a tread portion 2a, a pair of sidewall portions 2b extending from the two ends in the tire width direction A of the tread portion 2a to the inside of a tire radial direction B, and a pair of bead portions 2c provided at an end of each sidewall portion 2b in the inside of the tire radial direction B.

More specifically, the tire body 2 of the present embodiment includes a bead member 4, a carcass 5, a belt 6, tread rubber 7, side rubber 8, an inner liner 9, and an inner surface member 10.

### [Bead member 4]

The bead member 4 is embedded in the bead portion 2c. The bead member 4 includes a bead core 4a and a bead filler 4b made of rubber located on the outside of the tire radial direction B with respect to the bead core 4a. The bead core 4a includes a plurality of bead wires whose periphery is covered with rubber. The bead wires are formed of steel cords. The steel cords may be formed of, for example, steel monofilaments or stranded wires. Organic fibers, carbon fibers, or the like may also be used as the bead wires.

### [Carcass 5]

The carcass 5 straddles between the pair of bead portions 2c, more specifically between the bead cores 4a of the pair of bead members 4, and extends in a toroidal shape. The carcass 5 has at least a radial structure.

Further, the carcass 5 is constituted by one or more carcass plies 5a (one in the present embodiment) in which carcass cords are arranged at an angle of, for example, 75 degrees to 90 degrees with respect to a tire circumferential direction C. The carcass ply 5a includes a ply main body located between the pair of bead cores 4a, and ply folded portions that are folded from the inside to the outside in the tire width direction A around the bead cores 4a at the two ends of the ply main body. Then, the bead filler 4b that extends in a tapered shape from the bead core 4a to the outside in the tire radial direction B is disposed between the ply main body and the ply folded portion. In the present embodiment, the carcass cords constituting the carcass ply 5a are polyester cords. However, other cords such as organic fiber cords, like nylon, rayon and aramid, and steel cords if necessary, may be used. Further, the number of the carcass plies 5a may be two or more.

### [Belt 6]

The belt 6 includes one or more belt layers (five in the present embodiment) arranged outside the crown portion of the carcass 5 in the tire radial direction B. Specifically, the belt 6 of the present embodiment includes an inclined belt 6a and a circumferential belt 6b, as illustrated in FIG. 2.

As illustrated in FIG. 2, the inclined belt 6a includes one or more inclined belt layers (two in the present embodiment) arranged outside the crown portion of the carcass 5 in the tire radial direction B. More specifically, the inclined belt 6a of the present embodiment includes a first inclined belt layer 6a1 and a second inclined belt layer 6a2 that are laminated in the tire radial direction B. The first inclined belt layer 6a1 and the second inclined belt layer 6a2 are each formed of a belt ply in which steel cords as metal belt cords are arranged at an angle of inclination of 10 degrees to 40 degrees with respect to the tire circumferential direction C. The two belt plies are placed one on top of the other with their belt cords inclined in different directions. Therefore, the belt cords cross each other between the belt plies to improve the belt rigidity, and the tread portion 2a can be reinforced by the hoop effect over substantially the entire width.

As illustrated in FIG. 2, the circumferential belt 6b includes one or more circumferential belt layers (two in the present embodiment) arranged outside the inclined belt 6a in the tire radial direction B. More specifically, the circumferential belt 6b includes a first circumferential belt layer 6b1 and a second circumferential belt layer 6b2 that are laminated in the tire radial direction B. The first circumferential belt layer 6b1 and the second circumferential belt layer 6b2 each are formed of a belt ply in which nylon cords as organic fiber belt cords are spirally wound around the tire rotation axis at an angle of 10 degrees or less, preferably 5 degrees or less with respect to the tire circumferential direction C.

### [Tread rubber 7 and side rubber 8]

The tread rubber 7 constitutes an outer surface of the tread portion 2a in the tire radial direction B, and a tread pattern including, for example, a circumferential groove 7a extending in the tire circumferential direction C and a width direction groove (not illustrated in the drawings) extending in the tire width direction A is formed on the outer surface of the tread. The side rubber 8 constitutes an outer surface of the side wall portion 2b in the tire width direction A and is formed integrally with the above-described tread rubber 7.

### [Inner liner 9]

The inner liner 9 is laminated on the inner surface of the carcass 5 and is formed of butyl-based rubber having low air permeability. That is, the inner liner 9 forms a rubber layer 12 laminated on the inner surface of the carcass 5. Note that the butyl-based rubber means butyl rubber and halogenated butyl rubber which is a derivative thereof.

### [Inner surface member 10]

The inner surface member 10 is laminated on the inner surface of the inner liner 9, which is the rubber layer 12, and forms the tire inner surface 30. That is, the inner surface layer 11 of the present embodiment is formed by the inner surface member 10.

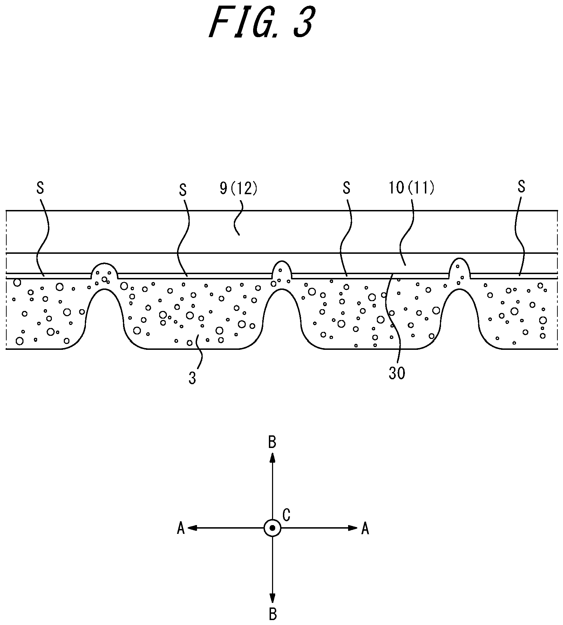

The tire body 2 is vulcanized and molded with the inner surface member 10 laminated on the inner surface of the inner liner 9. Therefore, in order to improve the release properties from a bladder that is in close contact during the vulcanization and molding, the tire inner surface 30, that is, the surface of the inner surface member 10 on the opposite side of the inner liner 9, is previously applied with a release agent such as silicon before the vulcanization and molding. FIG. 3 is an enlarged cross-sectional view in which a part of the tire inner surface 30 in FIG. 2 is further enlarged. As illustrated in FIG. 3, in the present embodiment, the above-described release agent S remaining on the tire inner surface 30 is not removed after the vulcanization and molding, and the porous body 3 is fixed to the tire inner surface 30 with the release agent S interposed between the tire inner surface 30 and the porous body 3. That is, the release agent S is interposed between the inner surface layer 11 and the porous body 3.

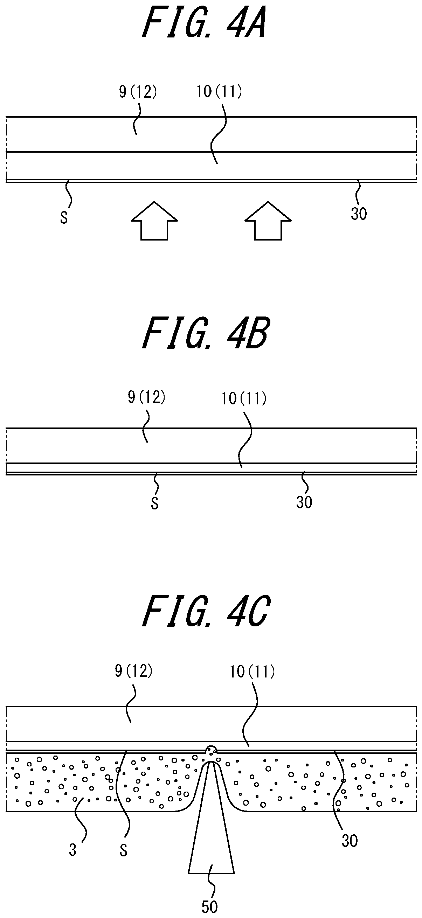

Because the porous body 3 is fixed to the inner surface member 10 forming the inner surface layer 11 with the release agent S interposed between the inner surface member 10 and the porous body 3, the release agent S serves as a film, and the inner surface layer 11 is less likely to come into contact with oxygen that permeates the porous body 3. That is, the exposure of the inner surface layer 11 to oxygen can be suppressed, and the deterioration of the inner surface layer 11 due to oxygen can be suppressed. The details of the method of fixing the porous body 3 will be described later (see FIGS. 4A to 4C).

The inner surface member 10 of the present embodiment is formed of a thermoplastic resin or contains a thermoplastic resin. In addition, the inner surface member 10 of the present embodiment can be formed of the material of the inner surface layer 11 described above. The porous body 3 is fixed to the inner surface member 10 with a part of the porous body 3 embedded in the inner surface member 10 forming the inner surface layer 11. The details of the method of fixing the porous body 3 to the inner surface member 10 will be described later (see FIGS. 4A to 4C).

The thickness of the inner surface member 10 is not particularly limited as long as it has a thickness in which a part of the porous body 3 can be embedded. For example, the thickness may be 3 µm or more.

### <Porous body 3>

As illustrated in FIG. 1, the porous body 3 of the present embodiment is adhered to a central region of the tire inner surface 30 in the tire width direction A. More specifically, the porous body 3 of the present embodiment is adhered to the tire inner surface 30 at a position where the tire inner surface 30 intersects with a tire equatorial plane CL.

The porous body 3 is not particularly limited as long as it is partially embedded in the inner surface layer 11 forming the tire inner surface 30. However, in the case of using the method of utilizing ultrasonic waves to fix the porous body 3 to the inner surface member 10 described later (see FIGS. 4A to 4C), the porous body 3 preferably has flexibility. In addition, in the case of using the method of utilizing ultrasonic waves to fix the porous body 3 to the inner surface member 10 described later (see FIGS. 4A to 4C), the density of the porous body 3 is preferably lower than the density of the inner surface layer 11 formed by the inner surface member 10 in the present embodiment. These conditions are easily satisfied when the porous body 3 is formed of a sponge material, nonwoven fabrics, or the like.

In addition, the melting point of the porous body 3 is preferably higher than the melting point of the inner surface layer 11 formed by the inner surface member 10 in the present embodiment. In this way, it is easy to embed a part of the porous body 3 in the inner surface layer 11 when the inner surface layer 11 formed by the inner surface member 10 is in a molten state, which is not limited to the fixing method utilizing ultrasonic waves (see FIGS. 4A to 4C).

Further, on the basis of the above-described magnitude relationship of melting points, the porous body 3 preferably has a structure where the temperature of the decomposition point is lower than the temperature of the melting point and the temperature of the decomposition point is higher than the temperature of the melting point of the inner surface layer 11. The "decomposition point" means the temperature at which thermal decomposition occurs. With such a structure, the porous body 3 is embedded in and fixed to the inner surface layer 11 at a temperature that is lower than the temperature of the decomposition point of the porous body 3. In this way, it is possible to embed a part of the porous body 3 in the inner surface layer 11 when the inner surface layer 11 formed by the inner surface member 10 is in a molten state while the porous body 3 is not melted, which is not limited to the fixing method utilizing ultrasonic waves (see FIGS. 4A to 4C). That is, the porous body 3, which is not melted and retains internal voids, can be embedded in the molten inner surface layer 11. As a result, the molten inner surface layer 11 easily enters the voids of the porous body 3. In other words, the porous body 3 is impregnated with the molten inner surface layer 11. In this state, when the inner surface layer 11 is cooled, the inner surface layer 11 is cured with a part of the inner surface layer 11 entering the voids of the porous body 3, which firmly holds the porous body 3 through the anchor effect. That is, when the porous body 3 has a structure where the temperature of the decomposition point is lower than the temperature of the melting point and the temperature of the decomposition point is higher than the temperature of the melting point of the inner surface layer 11, it is easy to achieve a porous body 3 that is firmly fixed to the inner surface layer 11. In this case, the material forming the porous body 3 or the material contained in the porous body 3 is not particularly limited. For example, it may be a porous body 3 formed of a thermosetting resin or an elastomer instead of a thermoplastic resin.

However, on the basis of the above-described magnitude relationship of melting points, the porous body 3 may have a structure where the temperature of the melting point is lower than the temperature of the decomposition point. With such a structure, the porous body 3 is embedded in and fixed to the inner surface layer 11 at a temperature that is equal to or higher than the temperature of the melting point of the porous body 3 and lower than the temperature of the decomposition point of the porous body 3. In this way, it is possible to embed a part of the porous body 3 in the inner surface layer 11 when the inner surface layer 11 formed by the inner surface member 10 is in a molten state and to melt the same part or another part of the porous body 3 to mix or weld it with the molten inner surface layer 11, which is not limited to the fixing method utilizing ultrasonic waves (see FIGS. 4A to 4C). That is, when the porous body 3 has a structure where the temperature of the melting point is lower than the temperature of the decomposition point, it is easy to achieve a porous body 3 that is fixed to the inner surface layer 11 by the both of embedding the porous body 3 in the inner surface layer 11 and mixing or welding the porous body 3 with the inner surface layer 11. In this case, the porous body 3 is formed of a thermoplastic resin or contains a thermoplastic resin.

As described above, it does not matter whether or not the porous body 3 is in a molten state during the fixing if a part of the porous body 3 is embedded in the inner surface layer 11 formed by the inner surface member 10.

Next, a method of fixing a porous body 3 of an embodiment of the present invention will be described. FIGS. 4A to 4C schematically illustrate an example of the method of fixing the porous body 3.

FIG. 4A illustrates the state of the tire body 2 during the vulcanization and molding. As illustrated in FIG. 4A, the vulcanization and molding of the tire body 2 is performed by laminating the inner surface layer 11 formed by the inner surface member 10 on the inner side of the rubber layer 12 formed by the inner liner 9 (the lower side in FIG. 4A). During the vulcanization and molding, the inner surface member 10 is pressed toward the inner liner 9 by a bladder that is not illustrated in the figure (see the outlined arrow in FIG. 4A). In order to improve the release properties after the vulcanization and molding, the surface of the inner surface member 10 that contacts the bladder or the outer surface of the bladder is previously applied with a release agent S.

FIG. 4B illustrates the state of the tire body 2 after the vulcanization and molding. As illustrated in FIG. 4B, the rubber layer 12 and the inner surface layer 11 are closely adhered to and integrated with each other because of the heat and pressure during the vulcanization and molding. Further, as illustrated in FIG. 4B, the release agent S is left on the tire inner surface 30 of the tire body 2 that is formed by the inner surface layer 11.

FIG. 4C illustrates fixing the porous body 3 to the inner surface layer 11 utilizing ultrasonic waves. As illustrated in FIG. 4C, the porous body 3 is arranged on the tire inner surface 30. Then, the porous body 3 is pressed toward the tire inner surface 30 by an ultrasonic horn 50 of an ultrasonic welding machine. In this state, frictional heat is generated on the tire inner surface 30 formed by the inner surface layer 11 because of the vibration energy of ultrasonic waves emitted from the ultrasonic horn 50, and the temperature rises instantly to the melting point of the inner surface layer 11. In this way, the porous body 3, which is pressed against the inner surface layer 11 by the ultrasonic horn 50, is embedded in the molten inner surface layer 11, as illustrated in FIG. 4C. Then, when the inner surface layer 11 is cooled, the porous body 3 can be fixed to the inner surface layer 11 with a part of the porous body 3 embedded in the inner surface layer 11.

The inner surface layer 11 is laminated on the inner liner 9 that is the rubber layer 12. The vibration energy of ultrasonic waves does not melt the rubber layer 12. Providing such a rubber layer 12 can suppress the melting of each portion on the opposite side of the inner surface layer 11 with the rubber layer 12 in between.

As described above, since the porous body 3 is fixed to the inner surface layer 11 with a part of the porous body 3 embedded in the inner surface layer 11, the porous body 3 can be fixed to the inner surface layer 11 regardless of whether or not the release agent S is adhered to the tire inner surface 30 formed by the inner surface layer 11.

In order to realize the ultrasonic welding according to FIG. 4C, the vibration energy of the ultrasonic waves emitted from the ultrasonic horn 50 should still be able to melt the tire inner surface 30 when the vibration energy reaches the tire inner surface 30 through the porous body 3. For that reason, it is preferable that the distance between the ultrasonic horn 50 and the tire inner surface 30 can be shortened. Therefore, it is preferable that the porous body 3 have flexibility so that the porous body 3 is compressed and deformed because of the pressing of the ultrasonic horn 50 and the thickness of the porous body 3 is reduced. With this structure, the tire inner surface can be easily melted even the ultrasonic welding is performed by emitting ultrasonic waves from the porous body 3 side.

In the case where the porous body 3 is not flexible, it is acceptable if the thickness of the porous body 3 is small. However, in the case of a porous body 3 of small thickness, the functions required for the porous body 3 such as sound absorbing performance may deteriorate. In the case where the porous body 3 is not flexible and the thickness of the porous body 3 is large, it is necessary to increase the intensity of the ultrasonic waves emitted from the ultrasonic horn 50, so that a versatile ultrasonic welding machine may not be used. For the above reasons, it is particularly preferable to use a porous body 3 having flexibility.

Further, in order to perform the ultrasonic welding according to FIG. 4C, the vibration energy of the ultrasonic waves emitted from the ultrasonic horn 50 should be concentrated on the tire inner surface 30 rather than the porous body 3. Therefore, the density of the porous body 3 is preferably lower than the density of the inner surface layer 11. As described above, in the case of using a porous body 3 having a lower density than that of the inner surface layer 11, the ultrasonic waves emitted from the ultrasonic horn 50 hardly attenuates in the porous body 3 as compared with the case of using a porous body having a higher density than that of the inner surface layer 11. That is, the ultrasonic waves reach the tire inner surface 30 easily. In addition, in the case of using an inner surface layer 11 having a higher density than that of the porous body 3, the ultrasonic waves emitted from the ultrasonic horn 50 easily attenuate in the inner surface layer 11 as compared with the case of using an inner surface layer having a lower density than that of the porous body 3. That is, the temperature of the inner surface layer 11 forming the tire inner surface 30 can be easily raised by the vibration energy of the ultrasonic waves. For the above reasons, when the density of the porous body 3 is lower than the density of the inner surface layer 11, the tire inner surface 30 can be easily melted even if the ultrasonic welding is performed by emitting ultrasonic waves from the porous body 3 side. In this way, it is easy to achieve a structure in which a part of the porous body 3 is embedded in the inner surface layer 11.

The density of the porous body 3 may be set, for example, in the range of 16 kg/m³ to 100 kg/m³ as described above. The density of the porous body 3 is preferably set within the above range so as to be lower than the density of the inner surface layer 11.

Further, in order to perform the ultrasonic welding according to FIG. 4C, the inner surface layer 11 should be melted before the porous body 3. Therefore, the melting point of the porous body 3 should be higher than the melting point of the inner surface layer 11.

The material of the porous body 3 may be, for example, a material having a melting point in the range of 100 °C to 260 °C. The material of the inner surface member 10 forming the inner surface layer 11 may be, for example, a material having a melting point in the range of 80 °C to 240 °C. The melting point of the porous body 3 is preferably set to be higher than the melting point of the inner surface layer 11 within these ranges.

As described above, the method of fixing a porous body 3 illustrated in FIGS. 4A to 4C includes melting the inner surface layer 11, which forms the tire inner surface 30 and is formed of a thermoplastic resin or contains a thermoplastic resin, and pressing the porous body 3 to embed a part of the porous body 3 in the inner surface layer 11. In this way, the porous body 3 can be fixed to the tire inner surface 30 without removing the release agent S from the tire inner surface 30.

The ultrasonic welding machine used in the fixing method illustrated in FIGS. 4A to 4C is preferably capable of emitting ultrasonic waves having a frequency of 35 kHz. In this way, it is possible to reduce the size of the ultrasonic welding machine to be used as compared with a versatile ultrasonic welding machine capable of emitting ultrasonic waves having a frequency of 20 kHz, and to increase the vibration energy input to the tire inner surface 30 per unit time. As a result, the work efficiency for welding can be improved. Considering the fact that the ultrasonic welding machine is used for the tire inner surface 30 of the tire body 2, it is particularly advantageous that the size of the ultrasonic welding machine can be reduced. In the present embodiment, a product named "ECOiSONIC" manufactured by SONOTRONIC capable of emitting ultrasonic waves having a frequency of 35 kHz may be used as the ultrasonic welding machine capable of emitting ultrasonic waves having a frequency of 35 kHz.

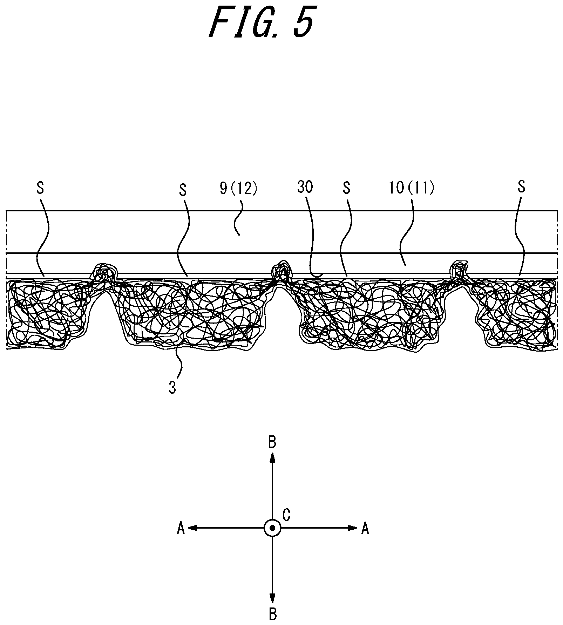

In addition, the porous body 3 of the present embodiment is formed of a sponge material as illustrated in FIGS. 1 to 4C, yet it may be formed of nonwoven fabrics as illustrated in FIG. 5. Examples of the porous body 3 formed of nonwoven fabrics include a model of heat-resistant filter for drying oven "AE-100" manufactured by Japan Vilene Company, Ltd. When the heat-resistant filter is embedded in and fixed to the inner surface layer 11 as a single layer, the ultrasonic surface pressure is preferably 0.32 kg/mm² or more. When two heat-resistant filters are stacked and embedded in and fixed to the inner surface layer 11, the ultrasonic surface pressure is preferably 0.49 kg/mm² or more.

When the heat-resistant filter described above is used as the porous body 3, the ultrasonic wave irradiation width may be 0.3 mm and the ultrasonic wave irradiation length may be 25 mm or 50 mm in order to realize desired embedding in the inner surface layer 11. The ultrasonic wave irradiation length is preferably 25 mm.

The tire and the method of fixing a porous body of the present invention are not limited to the specific structures and steps described in the above embodiment, and modifications and changes can be made without departing from the scope of the claims. For example, in the example illustrated in FIGS. 1 to 5, only a part of the porous body 3 is embedded in the inner surface layer 11 in the whole area of the porous body 3 in the tire width direction A, yet the porous body 3 may be embedded in the inner surface layer 11 over the whole area of the porous body 3 in the tire width direction A. Further, only a part of the porous body 3 is embedded in the inner surface layer 11 in the whole area of the porous body 3 in the tire circumferential direction C, yet the porous body 3 may be embedded in the inner surface layer 11 over the whole area of the porous body 3 in the tire circumferential direction C. Moreover, in the case where a part of the porous body 3 in the tire width direction A or a part of the porous body 3 in the tire circumferential direction C is embedded in the inner surface layer 11, the inner surface layer 11 may be partially melted by irradiating only the embedded part with ultrasonic waves as illustrated in FIGS. 4A to 4C.

The numbers of the inclined belt layers and the circumferential belt layers in the belt 6 of the tire 1 are not limited to the numbers described in the above embodiment. Further, the lengths of the inclined belt layer and the circumferential belt layer in the tire width direction A, and the positional relationship between the two ends of the inclined belt layer and the circumferential belt layer in the tire width direction A are not limited to the lengths and positional relationship described in the above embodiment.

### INDUSTRIAL APPLICABILITY

The present invention relates to a tire and a method of fixing a porous body.

### REFERENCE SIGNS LIST

- 1: tire
- 2: tire body
- 2a: tread portion
- 2b: sidewall portion
- 2c: bead portion
- 3: porous body
- 4: bead member
- 4a: bead core
- 4b: bead filler
- 5: carcass
- 5a: carcass ply
- 6: belt
- 6a: inclined belt
- 6a1: first inclined belt layer
- 6a2: second inclined belt layer
- 6b: circumferential belt
- 6b1: first circumferential belt layer
- 6b2: second circumferential belt layer
- 7: tread rubber
- 7a: circumferential groove
- 8: side rubber
- 9: inner liner
- 10: inner surface member
- 11: inner surface layer
- 12: rubber layer
- 30: tire inner surface
- 50: ultrasonic horn
- A: tire width direction
- B: tire radial direction
- C: tire circumferential direction
- S: release agent
- CL: tire equatorial plane

## Claims

1. A tire (1) comprising
an inner surface layer (11) that forms a tire inner surface (30) and is formed of a thermoplastic resin or contains a thermoplastic resin, and
a porous body (3) that is partially embedded in the inner surface layer, **characterized in that**:
a release agent (S) is interposed between the inner surface layer and the porous body.

2. The tire according to claim 1, wherein a density of the porous body is lower than a density of the inner surface layer.

3. The tire according to claim 1 or 2, wherein the porous body has flexibility.

4. The tire according to any one of claims 1 to 3, wherein a melting point of the porous body is higher than a melting point of the inner surface layer.

5. The tire according to claim 4, wherein the porous body has a temperature of the thermal decomposition point that is lower than its melting point and is higher than the melting point of the inner surface layer.

6. The tire according to claim 4, wherein the porous body has the melting point lower than a temperature of the thermal decomposition point.

7. The tire according to any one of claims 1 to 6, wherein the inner surface layer is laminated on a rubber layer.

8. A method of fixing a porous body (3), comprising melting an inner surface layer (11), where the inner surface layer forms a tire inner surface (30) and is formed of a thermoplastic resin or contains a thermoplastic resin, and pressing a porous body to embed the porous body in the inner surface layer, **characterized by** providing a release agent (S) interposed between the inner surface layer and the porous body.

## Patentansprüche

1. Reifen (1), umfassend
eine innere Oberflächenschicht (11), die eine Reifeninnenfläche (30) bildet und aus einem thermoplastischen Harz gebildet ist oder ein thermoplastisches Harz enthält, und
einen porösen Körper (3), der teilweise in die innere Oberflächenschicht eingebettet ist,
**dadurch gekennzeichnet, dass**:
ein Trennmittel (S) zwischen der inneren Oberflächenschicht und dem porösen Körper eingefügt ist.

2. Reifen nach Anspruch 1, wobei eine Dichte des porösen Körpers geringer als eine Dichte der inneren Oberflächenschicht ist.

3. Reifen nach Anspruch 1 oder 2, wobei der poröse Körper Flexibilität aufweist.

4. Reifen nach einem der Ansprüche 1 bis 3, wobei ein Schmelzpunkt des porösen Körpers höher als ein Schmelzpunkt der inneren Oberflächenschicht ist.

5. Reifen nach Anspruch 4, wobei der poröse Körper eine Temperatur des thermischen Zersetzungspunkts aufweist, die niedriger als sein Schmelzpunkt und höher als der Schmelzpunkt der inneren Oberflächenschicht ist.

6. Reifen nach Anspruch 4, wobei der poröse Körper einen Schmelzpunkt aufweist, der niedriger als eine Temperatur des thermischen Zersetzungspunkts ist.

7. Reifen nach einem der Ansprüche 1 bis 6, wobei die innere Oberflächenschicht auf eine Gummischicht laminiert ist.

8. Verfahren zum Fixieren eines porösen Körpers (3), umfassend das Schmelzen einer inneren Oberflächenschicht (11), worin die innere Oberflächenschicht eine Reifeninnenfläche (30) bildet und aus einem thermoplastischen Harz gebildet ist oder ein thermoplastisches Harz enthält, und Pressen eines porösen Körpers, um den porösen Körper in die innere Oberflächenschicht einzubetten, **gekennzeichnet durch** das Bereitstellen eines Trennmittels (S), das zwischen der inneren Oberflächenschicht und dem porösen Körper eingefügt ist.

## Revendications

1. Pneumatique (1) comprenant
une couche de surface intérieure (11) qui forme une surface intérieure de pneumatique (30) et qui est formée d'une résine thermoplastique ou qui contient une résine thermoplastique, et
un corps poreux (3) qui est partiellement implanté dans la couche de surface intérieure,
**caractérisé par le fait que** :
un agent de démoulage (S) est interposé entre la couche de surface intérieure et le corps poreux.

2. Pneumatique selon la revendication 1, dans lequel une densité du corps poreux est inférieure à une densité de la couche de surface intérieure.

3. Pneumatique selon la revendication 1 ou 2, dans lequel le corps poreux est flexible.

4. Pneumatique selon l'une des revendications 1 à 3, dans lequel un point de fusion du corps poreux est plus élevé qu'un point de fusion de la couche de surface intérieure.

5. Pneumatique selon la revendication 4, dans lequel le corps poreux a une température du point de décomposition thermique inférieure à son point de fusion et supérieure au point de fusion de la couche de surface intérieure.

6. Pneumatique selon la revendication 4, dans lequel le corps poreux a le point de fusion inférieur à une température du point de décomposition thermique.

7. Pneumatique selon l'une des revendications 1 à 6, dans lequel la couche de surface intérieure est stratifiée sur une couche de caoutchouc.

8. Procédé de fixation d'un corps poreux (3), comprenant la fusion d'une couche de surface intérieure (11), où la couche de surface intérieure forme une surface intérieure de pneumatique (30) et est formée d'une résine thermoplastique ou contient une résine thermoplastique, et le pressage d'un corps poreux pour implanter le corps poreux dans la couche de surface intérieure, **caractérisé par** la fourniture d'un agent de démoulage (S) interposé entre la couche de surface intérieure et le corps poreux.
